# FASCICULE DE BREVET EUROPEEN

(11) **EP 0 910 554 B1**
(45) Date de publication et mention de la délivrance du brevet: **19.06.2002**
(21) Numéro de dépôt: 97932878.8
(22) Date de dépôt: 10.07.1997
(51) Int. Cl.: C03B 37/08, B23P 15/16, B21K 21/08

(54) **FOND DE FILIERE A TETONS RAPPORTES**
SPINNDÜSEBODENPLATTE MIT AUSGESTOCHENEM NIPPEL
BUSHING BASE WITH MOUNTED NOZZLES

(30) Priorité: 12.07.1996 FR 9608739
(43) Date de publication de la demande: 28.04.1999
(73) Titulaire: ENGELHARD-CLAL SAS, 75003 Paris (FR)
(72) Inventeur: GUERLET, Jean-Paul, F-75011 Paris (FR); POULIQUEN, Frank, F-75011 Paris (FR); MICHEL, Daniel, F-94000 Créteil (FR)
(74) Mandataire: Portal, Gérard
(86) Numéro de dépôt international: FR9701255
(87) Numéro de publication internationale: WO9802387

(56) Documents cités:
- WO-A-82/01510
- CH-A- 375 494
- FR-A- 2 009 618
- US-A- 3 741 460
- PATENT ABSTRACTS OF JAPAN vol. 12, no. 82 (C-481) [2929] , 15 Mars 1988 & JP 62 216937 A (NIPPON GLASS SENI K.K.), 24 Septembre 1987,

## Description

L'invention concerne un procédé de fabrication de fond de filière, ainsi que le fond de filière ainsi obtenu et la filière elle-même. L'invention couvre aussi des pâtes de brasure en tant que produits nouveaux. Plus particulièrement, l'invention concerne un procédé de fabrication de fond de filière destiné au fibrage du verre, les fonds de filière ainsi obtenus, ainsi que les pâtes de brasure en tant que produits nouveaux.

### Description de l'art antérieur

Dans la fabrication de fibre de verre utilisée notamment pour le renforcement des matériaux plastiques, la filière est l'outil le plus délicat de la chaîne de production, car elle conditionne la qualité du produit fabriqué.

La filière est constituée généralement d'un alliage de platine et de rhodium et se présente sous la forme d'une boîte dans laquelle on introduit le verre fondu et qui comporte un fond perforé de nombreux troux. Chacun de ces trous est constitué d'une busette percée appelée "téton" par lequel le verre s'écoule et génère en sortie la fibre après solidification.

Dans la technologie de filière dite "à fusion directe", le verre est introduit à l'état fondu mais pour maintenir l'équilibre thermique on doit chauffer le corps de la filière par effet Joule. La plaque constituant le fond comporte plusieurs centaines voire milliers de tétons et dans les filières actuelles ou en cours de développement leur nombre peut atteindre 4000, ou même 6000.

Généralement, et pour éviter une déformation du fond, on sait répartir sur sa longueur et entre les postes des tétons des renforts mécaniques autorisant une meilleure rigidité en cours d'utilisation.

Les technologies actuelles de fabrication des filières et en particulier celles des fonds doivent tenir compte de contraintes d'ordre économique liées à la production de fibres ou à la tirée de la filière, et techniques liées à la géométrie et au nombre de tétons par unité de surface du fond permettant d'assurer le fibrage.

On a déjà proposé une méthode de fabrication de fond de filière basée sur une déformation de l'ensemble d'une plaque destinée à constituer le fond de la filière par emboutissage.

Cependant, une méthode par emboutissage est très difficile pour l'obtention d'une bonne régularité d'épaisseur du fond de filière.

Or, dans le cadre d'un procédé par emboutissage, il est nécessaire de laisser un volume de métal suffisant entre les deux trous voisins sous peine de voir le métal tirer à cet endroit au cours de l'emboutissage et provoquer ainsi une faiblesse dans l'épaisseur du fond, ce qui est très difficile à obtenir compte tenu du faible entraxe. Cette technologie ne permet également pas évidemment d'utiliser des matériaux différents pour la plaque et le téton. Cette technologie d'emboutissage est également coûteuse car elle nécessite un outillage d'emboutissage d'un coût élevé, même en travaillant plage par plage. Encore, cette méthode manque de flexibilité car pour passer d'un modèle à l'autre, il convient de refaire un outil.

De ce fait, la technologie a évolué vers la mise en oeuvre d'un procédé de fabrication dit associatif et beaucoup plus flexible, car il consiste à solidariser des tétons sur une plaque de fond sur laquelle on a réalisé un certain nombre de trous correspondants.

Par exemple, la demande JP-A-6-218448, publiée le 9 août 1994, divulgue une méthode selon laquelle on perfore un certain nombre de trous dans une plaque de fond de filière dans laquelle on introduit des cylindres pleins formant tétons qui sont écrasés ou mattés puis perforés.

De même, le document JP-A-7-81968, publié le 28 mars 1995, décrit l'introduction d'éléments tubulaires creux dans les trous d'une plaque de fond de filière qui sont assemblés par ajustage serré à jeu négatif avant de réaliser un traitement de diffusion thermique.

De même, le document JP-A-7-187702, publié le 27 juillet 1995, décrit un procédé similaire au document dernièrement cité avec l'emploi d'éléments tubulaires creux à diamètre extérieur supérieur au diamètre intérieur des trous de la plaque de fond.

Il est également proposé par le document JP-A-6-171971, publié le 21 juin 1994, un procédé de fabrication d'une plaque de four-filière dans laquelle après avoir introduit des buses de filage dans des trous d'une plaque, on interpose un élément intercalaire entre chaque orifice et chaque buse que l'on soumet ensuite à un traitement de soudage par diffusion.

Les méthodes de cette deuxième catégorie sont dites "techniques de tétons rapportés". L'invention entre dans cette catégorie de technique.

Dans cette technique de tétons rapportés de l'art antérieur, la méthode de liaison la plus utilisée est la méthode de soudage par traitement thermique de diffusion. Un exemple d'un tel traitement thermique par diffusion est le document US-A-4461191. Le document précédent JP-A-6-171971, publié le 21 juin 1994, réalise également un soudage par diffusion.

Le document EP-A2-0 727 393 est un document intercalaire opposable seulement au titre de la nouveauté en Allemagne, en France et en Grande-Bretagne selon l'article 54(3) CBE décrivant le principe d'une expansion mécanique radiale du téton avant le soudage du téton à la plaque par traitement thermique. Un jeu de revendications spécial pour DE, FR et GB évite ce document.

Dans le cadre des méthodes de soudage par diffusion, l'objectif est d'établir dans un premier temps, dans le trou, un contact intime entre le téton et la plaque puis de faire diffuser les matériaux les uns dans les autres au cours d'un traitement thermique à haute température, le temps et la température de ce traitement thermique étant réglés en fonction des matériaux assemblés ainsi que des états de surface. Le problème majeur de la technique de tétons rapportés est d'obtenir une étanchéité parfaite entre le téton et la plaque.

La présente invention a donc pour but de résoudre le problème technique consistant en la fourniture d'une solution dans le cadre des techniques de tétons rapportés qui permette d'obtenir une étanchéité parfaite entre le téton et la plaque en limitant, voire diminuant le nombre d'étapes nécessaires, tout en permettant une réalisation d'un procédé essentiellement entièrement automatisé.

L'invention doit également permettre de résoudre ce problème à un faible coût, par une méthode sûre et fiable qui soit utilisable à l'échelle industrielle. L'invention permet pour la première fois de résoudre ce nouveau problème technique.

Ainsi, selon un premier aspect, la présente invention fournit un procédé de fabrication d'un fond de filière comprenant la réalisation d'une pluralité de trous dans une plaque destinée à constituer le fond de filière, l'introduction d'au moins un téton, constitué par un élément tubulaire creux définissant un conduit traversant à l'intérieur de chaque trou de ladite plaque, et le soudage des tétons à ladite plaque par traitement thermique, caractérisé en ce que le téton a un diamètre extérieur légèrement inférieur au diamètre intérieur du trou, de manière à présenter un léger jeu et après introduction du téton dans le trou pour un positionnement adéquat, on réalise une expansion mécanique du téton, par exemple en introduisant un poinçon dans le conduit de l'élément tubulaire, assurant une solidarisation mécanique par contact intime des parois téton/plaque devant être liées à l'intérieur du trou, lequel procédé a, pour DE, FR et GB, aussi la caractéristique que, avant de procédér au soudage, on positionne entre les rangées de tétons (18), de préférence du côté extérieur du fond de filière, des traits continus d'une pâte de brasure de composition adaptée pour être liquide à la température du traitement thermique de soudage.

Selon une variante de réalisation, le soudage des tétons avec la plaque comprend un traitement thermique par diffusion dans l'état solide.

Selon une autre variante de réalisation, seulement pour AT, FI et IT, avant de procéder au soudage, on positionne entre les rangées de tétons, de préférence du côté extérieur du fond de filière, des traits continus d'une pâte de brasure de composition adaptée pour être liquide à la température du traitement thermique de soudage, pour que cette pâte de brasure une fois liquéfiée vienne remplir les espaces qui peuvent demeurer entre les parois des tétons et les trous de la plaque, de manière à assurer une étanchéité parfaite.

Selon une variante de réalisation, la plaque précitée est une plaque de platine ou d'un alliage de platine.

Selon un autre mode de réalisation, les tétons sont réalisés en le même métal ou alliage que la plaque. Les tétons pourront aussi être réalisés en un métal ou alliage différent de celui de la plaque.

Selon une autre variante de réalisation, l'expansion mécanique précitée consiste en une expansion radialement à l'axe du trou de la plaque, ledit axe coïncidant également essentiellement avec l'axe du téton en forme d'élément tubulaire creux.

Selon un mode de réalisation particulièrement avantageux de l'invention, la pâte de brasure comprend un métal ou un alliage qui présente un point de fusion inférieur au métal ou à l'alliage constituant la plaque et/ou le téton.

Selon un mode de réalisation particulièrement préféré, la pâte de brasure est une pâte à base de palladium ou à base de platine éventuellement combiné à au moins un métal abaissant le point de fusion, sous forme de poudre dispersée dans un liant polymère et éventuellement un diluant pour constituer ladite pâte.

Selon une variante de réalisation avantageuse, la pâte de brasure est constituée d'une poudre de palladium combinée à un liant polymère et à température de décomposition supérieure à 200° C, encore mieux supérieure à 300° C, et de préférence au moins égale à 400° C. Ce liant polymère peut être de préférence un liant polymère coulable, présentant une viscosité adaptée pour constituer ladite pâte de brasure. Ce liant polymère peut être par excemple un polybutène de poids moléculaire adapté.

Selon un mode de réalisation particulier, la pâte de brasure comprend de 80 à 90 % en poids de poudre de palladium et de 10 à 20 % en poids de liant polymère.

Selon un autre mode de réalisation particulier, la pâte de brasure comprend un alliage de platine et de cuivre sous forme de poudre dispersée dans un liant polymère ayant une température de décomposition supérieure à 200° C, encore mieux supérieure à 300° C, et de préférence au moins égale à 400° C. Ce liant polymère sera de préférence tel que défini ci-dessus.

Selon une variante de réalisation avantageuse, la pâte de brasure comprend un alliage de platine et de cuivre, dont la proportion de cuivre constitue de 20 à 40 % en poids de l'alliage, de préférence d'environ 35 % en poids. En outre, l'alliage platiné-cuivre peut être dispersé à raison de 95 à 80 % en poids dans un liant polymère constituant de 5 à 20 % en poids qui peut être de préférence tel que défini ci-dessus.

Selon un autre mode de réalisation du procédé selon l'invention, après avoir déposé un trait continu de pâte de brasure le long de chaque ligne de tétons, on effectue un traitement de cuisson à basse température, supérieure à la température de décomposition du liant, afin d'éliminer les matières volatiles incluant le liant, et le traitement thermique de soudage par diffusion est réalisé à une température à laquelle la pâte de brasure est liquide, c'est-à-dire que le métal de la pâte est lui-même liquide.

Selon une variante de réalisation particulière, et surtout relative à la fabrication de fond à très grand nombre de tétons, après le traitement thermique de soudage par diffusion, on effectue un test de fuite, par exemple par la technique de ressuage du rouge organol en présence de talc, et en cas de fuite on recommence le procédé à partir de l'expansion du téton.

Selon une utilisation actuellement préférée, la plaque de départ est une plaque destinée à constituer un fond de filière de fabrication de fibres de verre. Dans ce cas, la plaque formant fond de filière de fabrication de fibres de verre est réalisée en alliage platine-rhodium, par exemple à 10 % en poids de rhodium, les tétons sont également réalisés à partir de barres de platine-rhodium, par exemple à 10 % en poids de rhodium, et le traitement thermique de soudage par diffusion est réalisé à une température d'environ 1350° C pendant au moins 10 heures, en particulier 13 heures.

Selon une autre variante de réalisation avantageuse, le jeu initial entre teton et trou de la plaque est inférieur à 30 microns.

Selon un deuxieme aspect. la présente invention couvre également un fond de filière caractérisé en ce qu'il comprend des tétons constitués par des éléments tubulaires creux initialement de diamètre extérieur légèrement inférieur au diamètre intérieur des trous de la plaque formant fond de filière qui ont subi une étape d'expansion mécanique radialement à l'axe, assurant une solidarisation mécanique par contact intime des parois téton/plaque devant être liées à l'intérieur du trou, les tétons étant soudés à ladite plaque par traitement thermique, lequel fond de filière a, pour DE, FR et GB, aussi la caractéristique que les tétons sont brasés contre la plaque de fond par l'intermédiaire d'une pâte de brasure à base d'un métal ou d'un alliage de métaux dont le point de fusion est inférieur au point de fusion du métal ou de l'alliage du métal constituant la plaque et/ou les tétons.

Selon un mode de réalisation particulier de ce fond de filière, seulement pour DE, FR et GB, les tétons sont brasés contre la plaque de fond par l'intermédiaire d'une pâte de brasure à base d'un métal ou d'un alliage de métaux dont le point de fusion est inférieur au point de fusion du métal ou de l'alliage de métal constituant la plaque et/ou les tétons.

Selon un mode de réalisation actuellement préféré, la plaque de la filière est à base de platine, en particulier d'un alliage platine-rhodium, ainsi que les tétons, tandis que la pâte de brasure comprend initialement une poudre de palladium ou d'alliage de palladium, de préférence du palladium pur, ou une poudre de platine avec un métal ou un alliage de métaux à point de fusion inférieur à celui du platine, en particulier le cuivre.

D'autres buts, caractéristiques et avantages de l'invention apparaîtront également clairement à un homme de l'art à partir de la description suivante faite en référence à deux modes de réalisation actuellement préférés de l'invention qui font partie intégrante de l'invention.

Dans les dessins :
- la figure 1 est une vue schématique d'un fond de filière selon l'invention comprenant les organes principaux d'une filière, équipée des tétons de fibrage mis en oeuvre par la présente invention,
- la figure 2 représente l'étape du perçage d'une plaque pour réaliser les trous de fixation des tétons,
- la figure 3 représente l'étape de travail de barres pleines ou creuses destinées à constituer des tétons sous forme d'éléments tubulaires creux définissant des conduits traversants,
- la figure 4 représente l'étape d'assemblage des tétons à conduit traversant de la figure 3 par introduction dans les trous de la plaque de la figure 2,
- la figure 5 représente l'étape d'expansion mécanique radialement à l'axe des conduits traversants,
- la figure 6 représente une étape d'usinage du cône final du côté interne du téton, selon une variante de réalisation particulière, avant de faire subir les traitements thermiques nécessaires,
- la figure 7 représente schématiquement une étape préférée de l'invention dans laquelle on dépose une ligne continue de pâte de brasure au niveau de la jonction téton/plaque, avant de procéder au traitement thermique.

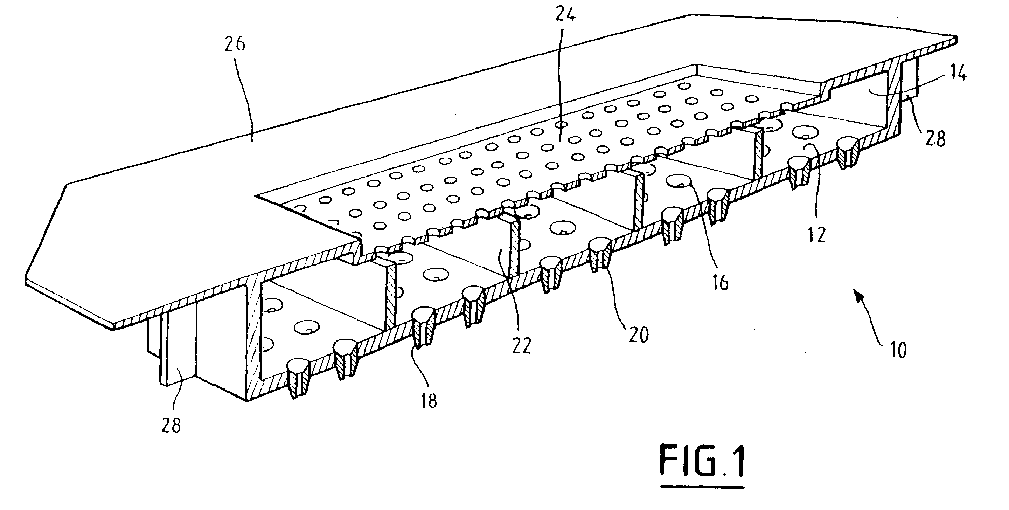

En référence à la figure 1, on a représenté une filière, ici destinée au filage du verre pour fabriquer des fils ou fibres de verre, cette filière est représentée par le numéro de référence générale 10. Cette filière comprend plus précisémment un fond 12 solidaire à un corps 14.

Le fond 12 de la filière 10 comporte une multitude de trous 16 dans lesquels sont insérés des tétons 18 constitués par des éléments tubulaires creux définissant des conduits traversants 20. A titre d'exemple, le fond 12 est renforcé mécaniquement par des éléments raidisseurs 22 sur lesquels repose une grille 24 au travers de laquelle est coulé le verre fondu. On peut également prévoir une collerette 26 limitant la zone de coulée du verre. Cette filière 10 est chauffée par des mors 28 d'amenée de courant électrique, comme cela est connu par la technique antérieure.

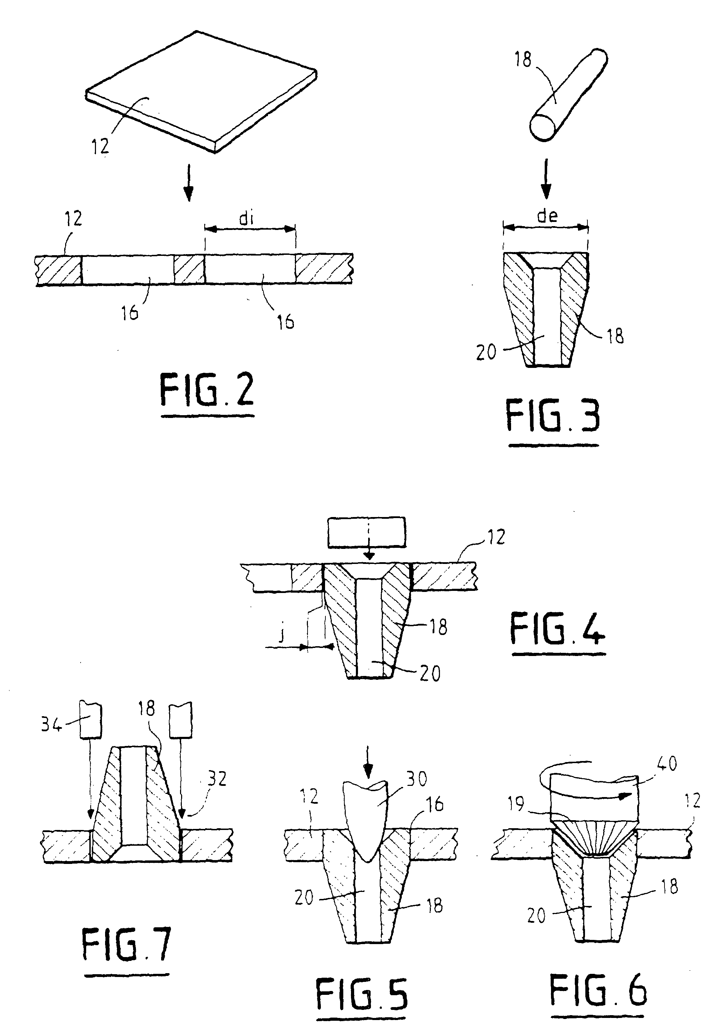

Dans le cadre de l'invention, le fond de filière est modifié pour comprendre des tétons 18 constitués par des éléments tubulaires creux initialement de diamètre extérieur (de) légèrement inférieur au diamètre intérieur (di) des trous 16 de la plaque 12 comme cela se voit bien à partir de la comparaison des figures 2 et 3 et de la figure 4.

On notera que dans l'exemple de réalisation représenté, les éléments tubulaires creux 18 présentent un profil extérieur principalement conique mais il est bien entendu que ces éléments tubulaires peuvent être de forme extérieure essentiellement cylindrique. La forme extérieure conique représentée facilite la mise en place de ces éléments dans les trous 16 de la plaque 12. Une fois les tétons 18 introduits dans les trous 16 de la plaque 12, il reste un léger jeu (j) qui peut être de l'ordre de 30 micromètres (voir figure 4).

On procède alors à une expansion mécanique, par exemple à l'aide d'un poinçon 30 de forme appropriée, par exemple conique, venant effectuer une expansion mécanique radiale en avançant à l'intérieur du conduit 20 du téton 18, comme symbolisé par les flèches à la figure 5.

Après expansion mécanique, on réalisera de préférence un dépôt d'un trait ou d'une ligne continue d'une pâte de brasure à l'aide d'un dispositif de dépôt 34 contenant la pâte de brasure, de forme adaptée à la forme du trou 16, disposé du côté extérieur du fond de filière, comme représenté à la figure 7, cette pâte de brasure présentant une composition adaptée pour être liquide à la température du traitement thermique de soudage (voir figure 7). Cette procédure permet d'assurer une très bonne étanchéité.

On peut procéder avant ou après cette étape à la création d'un cône final 19 à l'aide d'un outil approprié 40.

On procède enfin à un soudage des tétons 18 à la plaque 12 par traitement thermique comprenant avantageusement un traitement thermique par diffusion dans l'état solide.

Avantageusement, ce traitement thermique est réalisé à une température pour laquelle la pâte de brasure est liquide, permettant à celle-ci de s'insérer dans les interstices ou orifices laissés entre les parois externes des tétons 18 et les parois internes des trous 16 de la plaque 12. Le dépôt de la pâte de brasure à l'extérieur du fond de filière est avantageux car la partie saillante des tétons à l'extérieur du fond de filière empêche que la pâte de brasure puisse s'écouler à l'intérieur des conduits 20 des tétons 18.

Les conditions de réalisation de ces traitements thermiques sont bien connues à l'homme de l'art et dépendent du métal utilisé pour réaliser la plaque 12 ainsi que de celui utilisé pour réaliser les tétons 18. Avantageusement, il s'agit d'un métal identique.

Selon une réalisation telle qu'elle a été précédemment indiquée, la plaque est une plaque de platine tandis que selon un autre mode de réalisation, la plaque précitée est une plaque en platine-rhodium, en particulier à 10 % en poids en rhodium.

L'invention va maintenant être décrite en référence à deux exemples de réalisation donnés simplement à titre d'illustration et qui ne sauraient donc en aucune façon limiter la portée de l'invention.

### Exemple 1 :

Le fond de filière selon l'invention est fabriqué selon le procédé de l'invention de la manière suivante :
a) On utilise par exemple une plaque de départ en platine-rhodium à 10 % en poids en rhodium qui présente les dimensions finales du fond 12 de la filière 10.
b) On réalise le poinçonnage-découpage-calibration des trous 16 de la plaque 12, puis le cambrage (voir figure 2).
c) On réalise ensuite l'usinage des tétons 18 par decolletage à partir d'une barre pleine ou creuse, ici de préférence également en platine-rhodium à 10 % en poids en rhodium (voir figure 3).
   Ainsi, avant assemblage, le téton a sa forme extérieure finale et l'on vise entre le trou 16 et le téton 18 un jeu inférieur à 30 micromètres.
d) On positionne ensuite le téton 18 dans le trou 12 comme montré à la figure 4.
e) On expanse automatiquement radialement vers l'extérieur la paroi tubulaire du téton 18 en introduisant un outil tel qu'un poinçon dans le conduit 20 du téton 18 (voir figure 5).
f) Selon une première variante de réalisation, on peut ensuite effectuer un traitement thermique de soudage par diffusion dans l'état solide par exemple dans un four à résistance électrique à une température supéricure à 1300° C, par exemple à 1350° C pendant au moins 10 heures, par exemple 13 heures.
g) On effectue ensuite un test de fuites par une technique de test de fuites bien connue de l'homme de l'art, par exemple une technique du ressuage du rouge organol en présence de talc.
   En cas de fuite, on recommence les séquences e) à g) jusqu'à ce que le test de fuites ne mette plus en évidence de défauts d'étanchéité.
h) Enfin, on peut parfaire la forme du téton 18, par exemple en usinant le cône d'entrée du téton 18 et terminer l'alésage, comme cela est bien connu à l'homme de l'art.

### Exemple 2 :

On procède comme décrit à l'exemple 1 pour les étapes a) à e).

Cependant, on procède ensuite selon une variante de réalisation par l'étape supplémentaire qui consiste à utiliser une pâte de brasure.
f) Ainsi, on prépare une pâte de brasure du type précédemment décrit, par exemple à base d'une poudre de platine-cuivre à 35 % en poids en cuivre, dispersée dans un liant polymère, la poudre constituant environ 93 % de la pâte et le liant environ 7 %, par exemple de polybutène, ayant une viscosité d'environ 200.000 centipoises mesurée avec l'appareil de mesure de viscosité HAAKE RV12 PK 100 à 0,5° C, tournant à une vitesse de rotation de 0,8 tour/minute.

On peut aussi utiliser comme pâte de brasure une poudre de palladium dans un liant polymère, le liant représentant 14 % en poids de la pâte.
g) On dépose un trait continu de pâte de brasure 32 le long de chaque ligne de tétons 18 à l'aide d'un distributeur automatique 34 réglé avec une aiguille de diamètre par exemple 0,33 mm, à l'extérieur du fond de filière, comme représenté schématiquement à la figure 7.
h) On effectue ensuite un traitement de cuisson à une température modérée, supérieure au point de décomposition des matières volatiles de la pâte, principalement le liant polymère, par exemple à 600°C environ.
i) On effectue ensuite le traitement thermique de soudage par diffusion à l'état liquide de la pâte de brasure dans le four à résistance électrique comme précédemment décrit dans l'exemple 1 étape f), par exemple 1350° C pendant 13 heures.
j) On effectue ensuite le test de fuites précité et on recommence les séquences à partir de l'expansion de la paroi tubulaire du téton 18 jusqu'à ce que le test de fuite ne mette plus en évidence de défauts d'étanchéité.

## Revendications (Revendications pour l'(les) Etat(s) contractant(s) suivant(s): AT, FI, IT)

1. Procédé de fabrication d'un fond (12) de filière (10) comprenant la réalisation d'une pluralité de trous (16) dans une plaque destinée à constituer le fond (12) de filière, l'introduction d'au moins un téton (18), constitué par un élément tubulaire creux définissant un conduit traversant (20) à l'intérieur de chaque trou (16) de ladite plaque, et le soudage des tétons (18) à ladite plaque par traitement thermique, **caractérisé en ce que** le téton (18) a un diamètre extérieur (de) légèrement inférieur au diamètre intérieur (di) du trou (16), de manière à présenter un léger jeu et après introduction du téton (18) dans le trou (16), pour un positionnement adéquat, on réalise une expansion mécanique du téton (18), par exemple en introduisant un poinçon (30) dans le conduit (20) de l'élément tubulaire, assurant une solidarisation mécanique par contact intime des parois téton (18)/plaque (12) devant être liées à l'intérieur du trou (16).

2. Procédé selon la revendication 1, **caractérisé en ce que** le soudage des tétons (18) avec la plaque (12) comprend un traitement thermique par diffusion dans l'état solide.

3. Procédé selon la revendication 1 ou 2, **caractérisé en ce qu'**avant de procéder au soudage, on positionne entre les rangées de tétons (18), de préférence du côté extérieur du fond de filière, des traits continus d'une pâte de brasure de composition adaptée pour être liquide à la température du traitement thermique de soudage.

4. Procédé selon la revendication 3, **caractérisé en ce que** la plaque (12) précitée est une plaque de platine ou d'un alliage de platine.

5. Procédé selon l'une des revendications précédentes, **caractérisé en ce que** les tétons (18) sont réalisés en le même métal ou alliage que la plaque (12).

6. Procédé selon l'une des revendications précédentes, **caractérisé en ce que** l'expansion mécanique précitée consiste en une expansion radialement à l'axe du trou (16) de la plaque (12), ledit axe coïncidant également essentiellement avec l'axe du téton (18) en forme d'élément tubulaire creux.

7. Procédé selon l'une des revendications précédentes **caractérisé en ce que** la pâte de brasure comprend un métal ou un alliage qui présente un point de fusion inférieur au métal ou à l'alliage constituant la plaque et/ou le téton.

8. Procédé selon la revendication 7, **caractérisé en ce que** la pâte de brasure est une pâte à base de palladium ou à base de platine, éventuellement combiné à au moins un métal abaissant le point de fusion, sous forme de poudre dispersée dans un liant polymère et éventuellement un diluant pour constituer ladite pâte.

9. Procédé selon la revendication 8, **caractérisé en ce que** la pâte de brasure est constituée d'une poudre de palladium combinée à un liant polymère à température de décomposition supérieure à 200° C, encore mieux supérieure à 300° C, et de préférence au moins égale à 400° C.

10. Procédé selon la revendication 9, **caractérisé en ce que** la pâte de brasure comprend de 80 à 90 % de poudre de palladium et de 10 à 20 % de liant polymère.

11. Procédé selon l'une des revendications 3 à 10, **caractérisé en ce que** la pâte de brasure comprend un alliage de platine et de cuivre sous forme de poudre dispersée dans un liant polymère ayant une température de décomposition supérieure à 200° C, encore mieux, supérieure à 300° C et de préférence au moins égale à 400° C.

12. Procédé selon la revendication 11, **caractérisé en ce que** la pâte de brasure comprend un alliage de platine et de cuivre, dont la proportion de cuivre constitue de 20 à 40 % de l'alliage, de préférence d'environ 35 %, en poids, en particulier l'alliage platine-cuivre peut être dispersé en raison de 95 à 80 % en poids dans un liant polymère constituant de 5 à 20 % en poids.

13. Procédé selon l'une des revendications précédentes, **caractérisé en ce que** après avoir déposé un trait continu de pâte de brasure le long de chaque ligne de tétons (18), on effectue un traitement de cuisson à basse température, supérieure à la température de décomposition du liant, afin d'éliminer les matières volatiles incluant le liant et le traitement thermique de soudage par diffusion est réalisé à une température à laquelle la pâte de brasure est liquide.

14. Procédé selon l'une des revendications précédentes, **caractérisée en ce que** après le traitement thermique de soudage par diffusion, on effectue un test de fuite, par exemple par la technique de ressuage du rouge organol en présence de talc, et en cas de fuite on recommence le procédé à partir de l'expansion du téton.

15. Procédé selon l'une des revendications précédentes, **caractérisée en ce que** la plaque de départ est une plaque destinée à constituer un fond (12) de filière (10) de fabrication de fils ou fibres de verre.

16. Procédé selon la revendication 15, **caractérisé en ce que** la plaque (12) formant fond de filière de fabrication de fil ou fibre de verre est réalisée en alliage platine-rhodium, par exemple à 10 % de rhodium, les tétons (18) sont également réalisés à partir de barres de platine-rhodium, par exemple à 10 % de rhodium, et le traitement thermique de soudage par diffusion est réalisé à une température d'environ 1350° C pendant au moins 10 heures, en particulier 13 heures.

17. Procédé_selon l'une des revendications précédentes, **caractérisé en ce que** le jeu initial entre téton et trou de la plaque est inférieur à 30 microns.

18. Fond de filière, **caractérisé en ce qu'**il comprend des tétons (18) constitués par des éléments tubulaires creux initialement de diamètre extérieur légèrement inférieur au diamètre intérieur des trous (16) de la plaque (12) formant fond de filière qui ont subi une étape d'expansion mécanique radialement à l'axe, assurant une solidarisation mécanique par contact intime des parois téton/plaque devant être liées à l'intérieur du trou, les tétons étant soudés à ladite plaque par traitement thermique.

19. Fond de filière selon la revendication 18, **caractérisé en ce que** les tétons sont brasés contre la plaque de fond par l'intermédiaire d'une pâte de brasure à base d'un métal ou d'un alliage de métaux dont le point de fusion est inférieur au point de fusion du métal ou de l'alliage du métal constituant la plaque et/ou les tétons.

20. Fond de filière, selon la revendication 18 ou 19, **caractérisé en ce que** la plaque de la filière est à base de platine, en particulier d'un alliage platine-rhodium, ainsi que les tétons, tandis que la pâte de brasure comprend initialement une poudre de palladium ou d'alliage de palladium, de préférence du palladium pur, ou une poudre de platine avec un métal ou un alliage de métaux à point de fusion inférieur à celui du platine, en particulier le cuivre.

## Revendications (Revendications pour l'(les) Etat(s) contractant(s) suivant(s): DE, FR, GB)

1. Procédé de fabrication d'un fond (12) de filière (10) comprenant la réalisation d'une pluralité de trous (16) dans une plaque destinée à constituer le fond (12) de filière, l'introduction d'au moins un téton (18), constitué par un élément tubulaire creux définissant un conduit traversant (20) à l'intérieur de chaque trou (16) de ladite plaque, et le soudage des tétons (18) à ladite plaque par traitement thermique, le téton (18) ayant un diamètre extérieur (de) légèrement inférieur au diamètre intérieur (di) du trou (16), de manière à présenter un léger jeu et après introduction du téton (18) dans le trou (16), pour un positionnement adéquat, on réalise une expansion mécanique du téton (18), par exemple en introduisant un poinçon (30) dans le conduit (20) de l'élément tubulaire, assurant une solidarisation mécanique par contact intime des parois téton (18)/plaque (12) devant être liées à l'intérieur du trou (16), **caractérisé en ce que** avant de procéder au soudage, on positionne entre les rangées de tétons (18), de préférence du côté extérieur du fond de filière, des traits continus d'une pâte de brasure de composition adaptée pour être liquide à la température du traitement thermique de soudage.

2. Procédé selon la revendication 1, **caractérisé en ce que** le soudage des tétons (18) avec la plaque (12) comprend un traitement thermique par diffusion dans l'état solide.

3. Procédé selon la revendication 1 ou 2, **caractérisé en ce que** la plaque (12) précitée est une plaque de platine ou d'un alliage de platine.

4. Procédé selon l'une des revendications précédentes, **caractérisé en ce que** les tétons (18) sont réalisés en le même métal ou alliage que la plaque (12).

5. Procédé selon l'une des revendications précédentes, **caractérisé en ce que** l'expansion mécanique précitée consiste en une expansion radialement à l'axe du trou (16) de la plaque (12), ledit axe coïncidant également essentiellement avec l'axe du téton (18) en forme d'élément tubulaire creux.

6. Procédé selon l'une des revendications précédentes **caractérisé en ce que** la pâte de brasure comprend un métal ou un alliage qui présente un point de fusion inférieur au métal ou à l'alliage constituant la plaque et/ou le téton.

7. Procédé selon la revendication 6, **caractérisé en ce que** la pâte de brasure est une pâte à base de palladium ou à base de platine, éventuellement combiné à au moins un métal abaissant le point de fusion, sous forme de poudre dispersée dans un liant polymère et éventuellement un diluant pour constituer ladite pâte.

8. Procédé selon la revendication 7, **caractérisé en ce que** la pâte de brasure est constituée d'une poudre de palladium combinée à un liant polymère à température de décomposition supérieure à 200° C, encore mieux supérieure à 300° C, et de préférence au moins égale à 400° C.

9. Procédé selon la revendication 8, **caractérisé en ce que** la pâte de brasure comprend de 80 à 90 % de poudre de palladium et de 10 à 20 % de liant polymère.

10. Procédé selon l'une des revendications 1 à 9, **caractérisé en ce que** la pâte de brasure comprend un alliage de platine et de cuivre sous forme de poudre dispersée dans un liant polymère ayant une température de décomposition supérieure à 200° C, encore mieux, supérieure à 300° C et de préférence au moins égale à 400° C.

11. Procédé selon la revendication 10, **caractérisé en ce que** la pâte de brasure comprend un alliage de platine et de cuivre, dont la proportion de cuivre constitue de 20 à 40 % de l'alliage, de préférence d'environ 35 %, en poids, en particulier l'alliage platine-cuivre peut être dispersé en raison de 95 à 80 % en poids dans un liant polymère constituant de 5 à 20 % en poids.

12. Procédé selon l'une des revendications précédentes, **caractérisé en ce que** après avoir déposé un trait continu de pâte de brasure le long de chaque ligne de tétons (18), on effectue un traitement de cuisson à basse température, supérieure à la température de décomposition du liant, afin d'éliminer les matières volatiles incluant le liant et le traitement thermique de soudage par diffusion est réalisé à une température à laquelle la pâte de brasure est liquide.

13. Procédé selon l'une des revendications précédentes, **caractérisée en ce que** après le traitement thermique de soudage par diffusion, on effectue un test de fuite, par exemple par la technique de ressuage du rouge organol en présence de talc, et en cas de fuite on recommence le procédé à partir de l'expansion du téton.

14. Procédé selon l'une des revendications précédentes, **caractérisée en ce que** la plaque de départ est une plaque destinée à constituer un fond (12) de filière (10) de fabrication de fils ou fibres de verre.

15. Procédé selon la revendication 14, **caractérisé en ce que** la plaque (12) formant fond de filière de fabrication de fil ou fibre de verre est réalisée en alliage platine-rhodium, par exemple à 10 % de rhodium, les tétons (18) sont également réalisés à partir de barres de platine-rhodium, par exemple à 10 % de rhodium, et le traitement thermique de soudage par diffusion est réalisé à une température d'environ 1350° C pendant au moins 10 heures, en particulier 13 heures.

16. Procédé selon l'une des revendications précédentes, **caractérisé en ce que** le jeu initial entre téton et trou de la plaque est inférieur à 30 microns.

17. Fond de filière comprenant des tétons (18) constitués par des éléments tubulaires creux initialement de diamètre extérieur légèrement inférieur au diamètre intérieur des trous (16) de la plaque (12) formant fond de filière qui ont subi une étape d'expansion mécanique radialement à l'axe, assurant une solidarisation mécanique par contact intime des parois téton/plaque devant être liées à l'intérieur du trou. les tétons étant soudés à ladite plaque par traitement thermique, **caractérisé en ce que** les tétons sont brasés contre la plaque de fond par l'intermédiaire d'une pâte de brasure à base d'un métal ou d'un alliage de métaux dont le point de fusion est inférieur au point de fusion du métal ou de l'alliage du métal constituant la plaque et/ou les tétons.

18. Fond de filière, selon la revendication 17, **caractérisé en ce que** la plaque de la filière est à base de platine, en particulier d'un alliage platine-rhodium, ainsi que les tétons, tandis que la pâte de brasure comprend initialement une poudre de palladium ou d'alliage de palladium, de préférence du palladium pur, ou une poudre de platine avec un métal ou un alliage de métaux à point de fusion inférieur à celui du platine, en particulier le cuivre.

## Patentansprüche (Patentansprüche für folgende(n) Vertragsstaat(en): AT, FI, IT)

1. Verfahren zur Herstellung eines Bodens (12) für Düsen (10), umfassend die Herstellung einer Vielzahl von Löchern (16) in einer zur Bildung des Düsenbodens (12) bestimmten Platte, das Einsetzen von zumindest einem Zapfen (18), der aus einem röhrenförmigen hohlen Element besteht, das eine hindurchgehende Leitung (20) definiert, im Inneren eines jeden Lochs (16) der Platte, und die Verlötung der Zapfen (18) an der Platte mittels Wärmebehandlung, **dadurch gekennzeichnet, dass** der Zapfen (18) einen Außendurchmesser (de) aufweist, der geringfügig kleiner als der Innendurchmesser (di) des Lochs (16) ist, so dass ein geringes Spiel vorgesehen ist, und für eine adäquate Positionierung nach dem Einsetzen des Zapfens (18) in dem Loch (16) eine mechanische Aufweitung des Zapfens (18) vorgenommen wird, beispielsweise durch Einführen eines Dorns (30) in die Leitung (20) des röhrenförmigen Elements, um eine mechanische Befestigung mittels innigem Kontakt der Wandungen Zapfen (18)/Platte (12) vor einer festen Verbindung mit dem Inneren des Lochs (16) sicherzustellen.

2. Verfahren nach Anspruch 1, **dadurch gekennzeichnet, dass** die Verlötung der Zapfen (18) mit der Platte (12) eine Wärmebehandlung mittels Festkörper-Diffusion aufweist.

3. Verfahren nach Anspruch 1 oder 2, **dadurch gekennzeichnet, dass** vor dem Lötverfahren zwischen den Reihen der Zapfen (18), vorzugsweise von der Außenseite des Düsenbodens, durchgehende Streifen einer Lötpaste einer Zusammensetzung aufgebracht werden, die bei der Temperatur der Wärmebehandlung beim Löten flüssig ist.

4. Verfahren nach Anspruch 3, **dadurch gekennzeichnet, dass** die Platte (12) aus Platin oder einer Platinlegierung besteht.

5. Verfahren nach einem der vorhergehenden Ansprüche, **dadurch gekennzeichnet, dass** die Zapfen (18) aus dem gleichen Metall oder der gleichen Legierung wie die Platte (12) bestehen.

6. Verfahren nach einem der vorhergehenden Ansprüche, **dadurch gekennzeichnet, dass** die mechanische Aufweitung eine Aufweitung in radialer Richtung zur Achse des Lochs (16) der Platte (12) ist, wobei diese Achse auch im Wesentlichen mit der Achse des Zapfens (18) in Form eines röhrenförmigen hohlen Elements zusammenfällt.

7. Verfahren nach einem der vorhergehenden Ansprüche, **dadurch gekennzeichnet, dass** die Lötpaste ein Metall oder eine Legierung beinhaltet, die einen niedrigeren Schmelzpunkt als das Metall oder die Legierung der Platte und/oder des Zapfens hat.

8. Verfahren nach Anspruch 7, **dadurch gekennzeichnet, dass** die Lötpaste eine Paste auf Basis von Palladium oder auf Basis von Platin ist, gegebenfalls in Kombination mit zumindest einem den Schmelzpunkt senkenden Metall, in Form eines Pulvers, das in einem Polymer-Bindemittel und gegebenfalls einem Verdünnungsmittel zur Bildung der Paste dispergiert ist.

9. Verfahren nach Anspruch 8, **dadurch gekennzeichnet, dass** die Lötpaste aus einem Palladium-Pulver kombiniert mit einem Polymer-Bindemittel mit einer Zersetzungstemperatur über 200°C, vorzugsweise über 300°C, und besonders bevorzugt zumindest gleich 400°C, besteht.

10. Verfahren nach Anspruch 9, **dadurch gekennzeichnet, dass** die Lötpaste 80 bis 90% Palladium-Pulver und 10 bis 20% Polymer-Bindemittel aufweist.

11. Verfahren nach einem der Ansprüche 3 bis 10, **dadurch gekennzeichnet, dass** die Lötpaste eine Legierung aus Platin und Kupfer in Form von Pulver aufweist, das in einem Polymer-Bindemittel dispergiert ist, das eine Zersetzungstemperatur über 200°C, vorzugsweise über 300°C, und besonders bevorzugt zumindest gleich 400°C, aufweist.

12. Verfahren nach Anspruch 11, **dadurch gekennzeichnet, dass** die Lötpaste eine Legierung aus Platin und Kupfer aufweist, wobei der Kupfer-Gewichtsanteil 20 bis 40%, vorzugsweise 35%, bezogen auf die Legierung, beträgt, wobei die Platin/Kupfer-Legierung insbesondere in einem Verhältnis von 95 bis 80% Gewichtsanteil in einem Polymer-Bindemittel mit einem Gewichtsanteil von 5 bis 20% dispergiert sein kann.

13. Verfahren nach einem der vorhergehenden Ansprüche, **dadurch gekennzeichnet, dass**, nachdem ein durchgehender Streifen Lötpaste entlang jeder Reihe der Zapfen (18) angebracht wurde, eine Aushärtung bei niedriger Temperatur, höher als die Temperatur der Zersetzung des Bindemittels, bewirkt wird, um im Bindemittel eingeschlossene flüchtige Substanzen zu eliminieren, und die thermische Lötbehandlung durch Diffusion bei einer Temperatur durchgeführt wird, bei der die Lötpaste flüssig ist.

14. Verfahren nach einem der vorhergehenden Ansprüche, **dadurch gekennzeichnet, dass** nach der Wärmebehandlung durch Diffusionslöten, ein Test auf Undichtheit durchgeführt wird, beispielsweise durch die Technik der Farbeindringprüfung von Organolrot in Anwesenheit von Talk, wobei im Fall von Undichtheit das Verfahren beginnend von der Aufweitung des Zapfens wieder begonnen wird.

15. Verfahren nach einem der vorhergehenden Ansprüche, **dadurch gekennzeichnet, dass** die Ausgangsplatte eine Platte ist, die dazu bestimmt ist, den Boden (12) für Düsen (10) zur Herstellung von Glasfasern oder -fibern zu bilden.

16. Verfahren nach Anspruch 15, **dadurch gekennzeichnet, dass** die den Boden für die Düsen zur Herstellung von Glasfasern oder -fibern bildende Platte (12) aus einer Platin/Rhodium-Legierung besteht, beispielsweise mit 10% Rhodium, und dass die Zapfen (18) ausgehend von Stäben ebenfalls aus Platin-Rhodium hergestellt sind, beispielsweise mit 10% Rhodium, und die Wärmebehandlung durch Diffusionslöten bei einer Temperatur von ca. 1350°C für mindestens 10 Stunden, inbesondere 13 Stunden, durchgeführt wird.

17. Verfahren nach einem der vorhergehenden Ansprüche, **dadurch gekennzeichnet, dass** das anfängliche Spiel zwischen Zapfen und Plattenloch kleiner als 30 µm ist.

18. Düsenboden, **dadurch gekennzeichnet, dass** er Zapfen (18) aufweist, die von röhrenförmigen hohlen Elementen gebildet sind, anfänglich mit einem Außendurchmesser geringfügig kleiner als der Innendurchmesser von Löchern (16) einer den Düsenboden bildenden Platte (12), und die einem Schritt der mechanischen Aufweitung in radialer Richtung zur Achse unterzogen wurden, um eine mechanische Befestigung mittels innigem Kontakt der Wandungen Zapfen/Platte vor der Verbindung im Inneren des Lochs zu erlangen, wobei die Zapfen mittels Wärmebehandlung mit der Platte verlötet sind.

19. Düsenboden nach Anspruch 18, **dadurch gekennzeichnet, dass** die Zapfen mit der Bodenplatte mittels einer Lötpaste auf Basis von Metall oder einer metallischen Legierung verlötet sind, dessen bzw. deren Schmelzpunkt unter dem Schmelzpunkt des Metalls oder der Metalllegierung liegt, aus welcher die Platte und/oder die Zapfen bestehen.

20. Düsenboden nach Anspruch 18 oder 19, **dadurch gekennzeichnet, dass** die Düsenplatte auf Platin basiert, insbesondere auf einer Platin/Rhodium-Legierung, ebenso wie die Zapfen, wogegen die Lötpaste anfänglich ein Pulver aus Palladium oder einer Palladiumlegierung, bevorzugt reines Palladium, oder ein Pulver aus Platin mit einem Metall oder einer Legierung aus Metall, insbesondere Kupfer, mit einem Schmelzpunkt unterhalb jenem von Platin, aufweist.

## Patentansprüche (Patentansprüche für folgende(n) Vertragsstaat(en): DE, FR, Gb)

1. Verfahren zur Herstellung eines Bodens (12) für Düsen (10), umfassend die Herstellung einer Vielzahl von Löchern (16) in einer zur Bildung des Düsenbodens (12) bestimmten Platte, das Einsetzen von zumindest einem Zapfen (18), der aus einem röhrenförmigen hohlen Element besteht, das eine hindurchgehende Leitung (20) definiert, im Inneren eines jeden Lochs (16) der Platte, und die Verlötung der Zapfen (18) an der Platte mittels Wärmebehandlung, wobei der Zapfen (18) einen Außendurchmesser (de) aufweist, der geringfügig kleiner als der Innendurchmesser (di) des Lochs (16) ist, so dass ein geringes Spiel vorgesehen ist, und für eine adäquate Positionierung nach dem Einsetzen des Zapfens (18) in dem Loch (16) eine mechanische Aufweitung des Zapfens (18) vorgenommen wird, beispielsweise durch Einführen eines Dorns (30) in die Leitung (20) des röhrenförmigen Elements, um eine mechanische Befestigung mittels innigem Kontakt der Wandungen Zapfen (18)/Platte (12) vor einer festen Verbindung mit dem Inneren des Lochs (16) sicherzustellen, **dadurch gekennzeichnet, dass** vor dem Lötverfahren zwischen den Reihen der Zapfen (18), vorzugsweise von der Außenseite des Düsenbodens, durchgehende Streifen einer Lötpaste einer Zusammensetzung aufgebracht werden, die bei der Temperatur der Wärmebehandlung beim Löten flüssig ist.

2. Verfahren nach Anspruch 1, **dadurch gekennzeichnet, dass** die Verlötung der Zapfen (18) mit der Platte (12) eine Wärmebehandlung mittels Festkörper-Diffusion aufweist.

3. Verfahren nach Anspruch 1 oder 2, **dadurch gekennzeichnet, dass** die Platte (12) aus Platin oder einer Platinlegierung besteht.

4. Verfahren nach einem der vorhergehenden Ansprüche, **dadurch gekennzeichnet, dass** die Zapfen (18) aus dem gleichen Metall oder der gleichen Legierung wie die Platte (12) bestehen.

5. Verfahren nach einem der vorhergehenden Ansprüche, **dadurch gekennzeichnet, dass** die mechanische Aufweitung eine Aufweitung in radialer Richtung zur Achse des Lochs (16) der Platte (12) ist, wobei diese Achse auch im Wesentlichen mit der Achse des Zapfens (18) in Form eines röhrenförmigen hohlen Elements zusammenfällt.

6. Verfahren nach einem der vorhergehenden Ansprüche, **dadurch gekennzeichnet, dass** die Lötpaste ein Metall oder eine Legierung beinhaltet, die einen niedrigeren Schmelzpunkt als das Metall oder die Legierung der Platte und/oder des Zapfens hat.

7. Verfahren nach Anspruch 6, **dadurch gekennzeichnet, dass** die Lötpaste eine Paste auf Basis von Palladium oder auf Basis von Platin ist, gegebenfalls in Kombination mit zumindest einem den Schmelzpunkt senkenden Metall, in Form eines Pulvers, das in einem Polymer-Bindemittel und gegebenfalls einem Verdünnungsmittel zur Bildung der Paste dispergiert ist.

8. Verfahren nach Anspruch 7, **dadurch gekennzeichnet, dass** die Lötpaste aus einem Palladium-Pulver kombiniert mit einem Polymer-Bindemittel mit einer Zersetzungstemperatur über 200°C, vorzugsweise über 300°C, und besonders bevorzugt zumindest gleich 400°C, besteht.

9. Verfahren nach Anspruch 8, **dadurch gekennzeichnet, dass** die Lötpaste 80 bis 90% Palladium-Pulver und 10 bis 20% Polymer-Bindemittel aufweist.

10. Verfahren nach einem der Ansprüche 1 bis 9, **dadurch gekennzeichnet, dass** die Lötpaste eine.Legierung aus Platin und Kupfer in Form von Pulver aufweist, das in einem Polymer-Bindemittel dispergiert ist, das eine Zersetzungstemperatur über 200°C, vorzugsweise über 300°C, und besonders bevorzugt zumindest gleich 400°C, aufweist.

11. Verfahren nach Anspruch 10, **dadurch gekennzeichnet, dass** die Lötpaste eine Legierung aus Platin und Kupfer aufweist, wobei der Kupfer-Gewichtsanteil 20 bis 40%, vorzugsweise 35%, bezogen auf die Legierung, beträgt, wobei die Platin/Kupfer-Legierung insbesondere in einem Verhältnis von 95 bis 80% Gewichtsanteil in einem Polymer-Bindemittel mit einem Gewichtsanteil von 5 bis 20% dispergiert sein kann.

12. Verfahren nach einem der vorhergehenden Ansprüche, **dadurch gekennzeichnet, dass**, nachdem ein durchgehender Streifen Lötpaste entlang jeder Reihe der Zapfen (18) angebracht wurde, eine Aushärtung bei niedriger Temperatur, höher als die Temperatur der Zersetzung des Bindemittels, bewirkt wird, um im Bindemittel eingeschlossene flüchtige Substanzen zu eliminieren, und die thermische Lötbehandlung durch Diffusion bei einer Temperatur durchgeführt wird, bei der die Lötpaste flüssig ist.

13. Verfahren nach einem der vorhergehenden Ansprüche, **dadurch gekennzeichnet, dass** nach der Wärmebehandlung durch Diffusionslöten, ein Test auf Undichtheit durchgeführt wird, beispielsweise durch die Technik der Farbeindringprüfung von Organolrot in Anwesenheit von Talk, wobei im Fall von Undichtheit das Verfahren beginnend von der Aufweitung des Zapfens wieder begonnen wird.

14. Verfahren nach einem der vorhergehenden Ansprüche, **dadurch gekennzeichnet, dass** die Ausgangsplatte eine Platte ist, die dazu bestimmt ist, den Boden (12) für Düsen (10) zur Herstellung von Glasfasern oder -fibern zu bilden.

15. Verfahren nach Anspruch 14, **dadurch gekennzeichnet, dass** die den Boden für die Düsen zur Herstellung von Glasfasern oder -fibern bildende Platte (12) aus einer Platin/Rhodium-Legierung besteht, beispielsweise mit 10% Rhodium, und dass die Zapfen (18) ausgehend von Stäben ebenfalls aus Platin-Rhodium hergestellt sind, beispielsweise mit 10% Rhodium, und die Wärmebehandlung durch Diffusionslöten bei einer Temperatur von ca. 1350°C für mindestens 10 Stunden, inbesondere 13 Stunden, durchgeführt wird.

16. Verfahren nach einem der vorhergehenden Ansprüche, **dadurch gekennzeichnet, dass** das anfängliche Spiel zwischen Zapfen und Plattenloch kleiner als 30 µm ist.

17. Düsenboden mit Zapfen (18), die von röhrenförmigen hohlen Elementen gebildet sind, anfänglich mit einem Außendurchmesser geringfügig kleiner als der Innendurchmesser von Löchern (16) einer den Düsenboden bildenden Platte (12), und die einem Schritt der mechanischen Aufweitung in radialer Richtung zur Achse unterzogen wurden, um eine mechanische Befestigung mittels innigem Kontakt der Wandungen Zapfen/Platte vor der Verbindung im Inneren des Lochs zu erlangen, wobei die Zapfen mittels Wärmebehandlung mit der Platte verlötet sind, **dadurch gekennzeichnet, dass** die Zapfen mit der Bodenplatte mittels einer Lötpaste auf Basis von Metall oder einer metallischen Legierung verlötet sind, dessen bzw. deren Schmelzpunkt unter dem Schmelzpunkt des Metalls oder der Metalllegierung liegt, aus welcher die Platte und/oder die Zapfen bestehen.

18. Düsenboden nach Anspruch 17, **dadurch gekennzeichnet, dass** die Düsenplatte auf Platin basiert, insbesondere auf einer Platin/Rhodium-Legierung, ebenso wie die Zapfen, wogegen die Lötpaste anfänglich ein Pulver aus Palladium oder einer Palladiumlegierung, bevorzugt reines Palladium, oder ein Pulver aus Platin mit einem Metall oder einer Legierung aus Metall, insbesondere Kupfer, mit einem Schmelzpunkt unterhalb jenem von Platin, aufweist.

## Claims (Claims for the following Contracting State(s): AT, FI, IT)

1. A method of manufacturing a base (12) of a bushing (10), the method comprising making a plurality of holes (16) in a plate that is to constitute the base (12) of a bushing, inserting at least one nozzle (18) constituted by a hollow tubular element defining a through duct (20) in each hole (16) in said plate, and welding the nozzles (18) to said plate by heat treatment, the method being **characterised in that** the nozzle (18) has an outside diameter (de) which is slightly smaller than the inside diameter (di) of the hole (16), so as to leave a small amount of clearance, and after a nozzle (18) has been inserted in the hole (16) for appropriate positioning, the nozzle (18) is subjected to mechanical expansion, e.g. by inserting a punch (30) in the duct (20) of the tubular element, thereby mechanically securing the nozzle (18)/plate (12) walls that are to be joined by intimate contact inside the hole (16).

2. The method according to claim 1, **characterised in that** the welding of the nozzles (18) with the plate (12) comprises a solid state diffusion heat treatment.

3. The method according to claim 1 or 2, **characterised in that** prior to performing the welding, continuous lines of a brazing filler paste are positioned between the rows of nozzles (18), preferably on the outside of the bushing base, the composition of the paste being adapted to be liquid at the temperature of the heat treatment of the welding.

4. The method according to claim 3, **characterised in that** the plate (12) mentioned above is a platinum plate or a platinum alloy plate.

5. The method according to any preceding claim, **characterised in that** the nozzles (18) are made of the same metal or alloy as the plate (12).

6. The method according to any preceding claim, **characterised in that** the mechanical expansion mentioned above consists in performing expansion radially to the axes of the holes (16) in the plate (12), said axes also essentially coinciding with the axes of the nozzles (18) in the form of hollow tubular elements.

7. The method according to any preceding claim, **characterised in that** said brazing filler paste comprises a metal or alloy having a melting point lower than that of the metal or alloy constituting the plate and/or the nozzles.

8. The method according to claim 7, **characterised in that** the brazing filler paste is a paste based on palladium or on platinum, optionally combined with at least one metal which lowers its melting point, in the form of powder dispersed in a polymer binder and optionally a diluent for constituting said paste.

9. The method according to claim 8, **characterised in that** the brazing filler paste is constituted by palladium powder combined with a polymer binder having a decomposition temperature greater than 200°C, better greater than 300°C, and preferably at least equal to 400°C.

10. The method according to claim 9, **characterised in that** the brazing filler paste comprises 80% to 90% palladium powder and 10% to 20% polymer binder.

11. The method according to any of claims 3 to 10, **characterised in that** the brazing filler paste comprises an alloy of platinum and copper in powder form dispersed in a polymer binder having a decomposition temperature greater than 200°C, better greater than 300°C, and preferably at least equal to 400°C.

12. The method according to claim 11, **characterised in that** the brazing filler paste comprises an alloy of platinum and copper, in which the copper constitutes 20% to 40% of the alloy, preferably about 35%, by weight, in particular the platinum-copper alloy may be dispersed at 95% to 80% by weight in a polymer binder constituting 5% to 20% by weight.

13. The method according to any preceding claim, **characterised in that** after a continuous line of brazing filler paste has been deposited along each row of nozzles (18), a baking operation is performed at low temperature, higher than the decomposition temperature of the binder, so as to eliminate the volatile materials including the binder, and the diffusion welding heat treatment is performed at a temperature at which the brazing filler paste is liquid.

14. The method according to any preceding claim, **characterised in that** after the diffusion welding heat treatment, leakage testing is performed, e.g. by the technique of red organol sweating in the presence of talc, and in the event of leakage, the method is restarted from nozzle expansion.

15. The method according to any preceding claim, **characterised in that** the starting plate is a plate designed to constitute the base (12) of a bushing (10) for making glass fibres or filaments.

16. The method according to claim 15, **characterised in that** the plate (12) forming a bushing base for making glass fibres or filaments is made of a platinum-rhodium alloy, e.g. having 10% rhodium, the nozzles (18) are also made from platinum-rhodium bars, e.g. having 10% rhodium, and the diffusion bonding heat treatment is performed at a temperature of about 1,350°C for at least 10 hours, in particular for 13 hours.

17. The method according to any preceding claim, **characterised in that** the initial clearance between each nozzle and its hole in the plate is less than 30 microns.

18. A bushing base, **characterised in that** it comprises nozzles (18) constituted by hollow tubular elements initially having an outside diameter slightly smaller than the inside diameter of holes (16) in the plate (12) forming the bushing base, which nozzles have been subjected to a step of being mechanically expanded radially relative to their axes, thereby mechanically securing the nozzle/plate walls that are to be joined by intimate contact inside the hole, the nozzles being welded to said plate by heat treatment.

19. The bushing base according to claim 18, **characterised in that** the nozzles are brazed to the base plate by means of a brazing filler paste based on a metal or a metal alloy the melting point of which is lower than the melting point of the metal or metal alloy constituting the plate and/or the nozzles.

20. The bushing base according to claim 18 or 19, **characterised in that** the bushing plate is based on platinum, in particular on a platinum-rhodium alloy, as are the nozzles, while the brazing filler paste initially comprises palladium powder or palladium alloy powder, preferably pure palladium powder, or platinum powder together with a metal or metal alloy having a melting point lower than that of platinum, in particular copper.

## Claims (Claims for the following Contracting State(s): DE, FR, GB)

1. A method of manufacturing a base (12) of a bushing (10), the method comprising making a plurality of holes (16) in a plate that is to constitute the base (12) of a bushing, inserting at least one nozzle (18) constituted by a hollow tubular element defining a through duct (20) in each hole (16) in said plate, and welding the nozzles (18) to said plate by heat treatment, the nozzle (18) having an outside diameter (de) which is slightly smaller than the inside diameter (di) of the hole (16), so as to leave a small amount of clearance, and after a nozzle (18) has been inserted in the hole (16) for appropriate positioning, the nozzle (18) is subjected to mechanical expansion, e.g. by inserting a punch (30) in the duct (20) of the tubular element, thereby mechanically securing the nozzle (18)/plate (12) walls that are to be joined by intimate contact inside the hole (16), **characterised in that** prior to performing the welding, continuous lines of a brazing filler paste are positioned between the rows of nozzles (18), preferably on the outside of the bushing base, the composition of the paste being adapted to be liquid at the temperature of the heat treatment of the welding.

2. The method according to claim 1, **characterised in that** the welding of the nozzles (18) with the plate (12) comprises a solid state diffusion heat treatment.

3. The method according to claim 1 or 2, **characterised in that** the plate (12) mentioned above is a platinum plate or a platinum alloy plate.

4. The method according to any preceding claim, **characterised in that** the nozzles (18) are made of the same metal or alloy as the plate (12).

5. The method according to any preceding claim, **characterised in that** the mechanical expansion mentioned above consists in performing expansion radially to the axes of the holes (16) in the plate (12), said axes also essentially coinciding with the axes of the nozzles (18) in the form of hollow tubular elements.

6. The method according to any preceding claim, **characterised in that** said brazing filler paste comprises a metal or alloy having a melting point lower than that of the metal or alloy constituting the plate and/or the nozzles.

7. The method according to claim 6, **characterised in that** the brazing filler paste is a paste based on palladium or on platinum, optionally combined with at least one metal which lowers its melting point, in the form of powder dispersed in a polymer binder and optionally a diluent for constituting said paste.

8. The method according to claim 7, **characterised in that** the brazing filler paste is constituted by palladium powder combined with a polymer binder having a decomposition temperature greater than 200°C, better greater than 300°C, and preferably at least equal to 400°C.

9. The method according to claim 8, **characterised in that** the brazing filler paste comprises 80% to 90% palladium powder and 10% to 20% polymer binder.

10. The method according to any of claims 1 to 9, **characterised in that** the brazing filler paste comprises an alloy of platinum and copper in powder form dispersed in a polymer binder having a decomposition temperature greater than 200°C, better greater than 300°C, and preferably at least equal to 400°C.

11. The method according to claim 10, **characterised in that** the brazing filler paste comprises an alloy of platinum and copper, in which the copper constitutes 20% to 40% of the alloy, preferably about 35%, by weight, in particular the platinum-copper alloy may be dispersed at 95% to 80% by weight in a polymer binder constituting 5% to 20% by weight.

12. The method according to any preceding claim, **characterised in that** after a continuous line of brazing filler paste has been deposited along each row of nozzles (18), a baking operation is performed at low temperature, higher than the decomposition temperature of the binder, so as to eliminate the volatile materials including the binder, and the diffusion welding heat treatment is performed at a temperature at which the brazing filler paste is liquid.

13. The method according to any preceding claim, **characterised in that** after the diffusion welding heat treatment, leakage testing is performed, e.g. by the technique of red organol sweating in the presence of talc, and in the event of leakage, the method is restarted from nozzle expansion.

14. The method according to any preceding claim, **characterised in that** the starting plate is a plate designed to constitute the base (12) of a bushing (10) for making glass fibres or filaments.

15. The method according to claim 14, **characterised in that** the plate (12) forming a bushing base for making glass fibres or filaments is made of a platinum-rhodium alloy, e.g. having 10% rhodium, the nozzles (18) are also made from platinum-rhodium bars, e.g. having 10% rhodium, and the diffusion bonding heat treatment is performed at a temperature of about 1,350°C for at least 10 hours, in particular for 13 hours.

16. The method according to any preceding claim, **characterised in that** the initial clearance between each nozzle and its hole in the plate is less than 30 microns.

17. A bushing base comprising nozzles (18) constituted by hollow tubular elements initially having an outside diameter slightly smaller than the inside diameter of holes (16) in the plate (12) forming the bushing base, which nozzles have been subjected to a step of being mechanically expanded radially relative to their axes, thereby mechanically securing the nozzle/plate walls that are to be joined by intimate contact inside the hole, the nozzles being welded to said plate by heat treatment, **characterised in that** the nozzles are brazed to the base plate by means of a brazing filler paste based on a metal or a metal alloy the melting point of which is lower than the melting point of the metal or metal alloy constituting the plate and/or the nozzles.

18. The bushing base according to claim 17, **characterised in that** the bushing plate is based on platinum, in particular on a platinum-rhodium alloy, as are the nozzles, while the brazing filler paste initially comprises palladium powder or palladium alloy powder, preferably pure palladium powder, or platinum powder together with a metal or metal alloy having a melting point lower than that of platinum, in particular copper.
